Europäisches Patentamt

(19) European Patent Office

Office européen des brevets

(11) **EP 0 840 752 B1**

(12) **EUROPEAN PATENT SPECIFICATION**

(45) Date of publication and mention
of the grant of the patent:
**19.01.2000 Bulletin 2000/03**

(51) Int Cl.[7]: **C08B 37/00**, C08B 15/00,
C08B 33/00, B01J 20/00,
C09D 105/00

(21) Application number: **96927034.7**

(22) Date of filing: **17.07.1996**

(86) International application number:
**PCT/EP96/03145**

(87) International publication number:
**WO 97/04011 (06.02.1997 Gazette 1997/07)**

(54) **PHOTOCHEMICALLY CROSS-LINKED POLYSACCHARIDE DERIVATIVES HAVING NO PHOTOPOLYMERISABLE FUNCTIONAL GROUPS**

FOTOCHEMISCH VERNETZTE POLYSACCHARIDDERIVATE OHNE PHOTOPOLYMERISIERBAREN FUNKTIONELLEN GRUPPEN

DERIVES DE POLYSACCHARIDE RETICULES PHOTOCHIMIQUEMENT NE CONTENANT PAS DE GROUPES FONCTIONNELS PHOTOPOLYMERISABLES

(84) Designated Contracting States:
**AT BE CH DE DK ES FI FR GB GR IE IT LI LU MC NL PT SE**

(30) Priority: **21.07.1995 CH 216095**

(43) Date of publication of application:
**13.05.1998 Bulletin 1998/20**

(73) Proprietors:
• **Novartis AG**
**4058 Basel (CH)**
Designated Contracting States:
**BE CH DE DK ES FI FR GB GR IE IT LI LU MC NL PT SE**
• **Novartis-Erfindungen Verwaltungsgesellschaft m.b.H.**
**1235 Wien (AT)**
Designated Contracting States:
**AT**

(72) Inventors:
• **FRANCOTTE, Eric**
**CH-4412 Nuglar (CH)**
• **ZHANG, Tong**
**F-67000 Strasbourg (FR)**

(56) References cited:
**EP-A- 0 321 882**          **WO-A-92/13894**

• **JOURNAL OF LIQUID CHROMATOGRAPHY, vol. 18, no. 8, 1995, pages 1521-1532, XP000574145 L. OLIVEROS ET AL.: "Chiral chromatographic discrimination ability of a cellulose 3,5-dimethylphenylcarbamate/10-undecenoate mixed derivative fixed on several chromatographic matrices" cited in the application**
• **PATENT ABSTRACTS OF JAPAN vol. 18, no. 322 (C-1214) [6662], 20 June 1994 & JP,A,06 073102 (SEIKAGAKU KOGYO CO LTD), 15 March 1994,**

## EP 0 840 752 B1

### Description

The invention relates to substantially photochemically cross-linked polysaccharide derivatives that do not contain photopolymerisable functional groups prior to the cross-linking, which can be used as carrier materials for the chromatographic separation of enantiomers.

K. Kimata *et al* describe in Anal. Methods and Instrumentation, Vol 1, (1993) 23, the preparation of a chiral carrier material that is stable towards solvents and that is obtained by polymerisation of cellulose vinyl benzoate. The chemically bonded stationary phases, which consist of cellulose, are compared with non-polymerised analogous phases in respect of their chiral selectivity and stability towards solvents, there being observed an increase in the stability towards organic solvents and a slight decrease in the chiral selectivity of the chemically bonded cellulose.

C. Oliveros *et al* describe in J. Liquid Chromatogr., 18 (1995) 1521, stationary phases consisting of 3,5-dimethylphenyl carbamate cellulose that have been immobilised on a carrier. The resulting chiral stationary phases can be immobilised, for example, on carriers, for example silica gel, and are then resistant to the customary solvents, the method of immobilisation employed in that work already having been known from the prior art (for example U.S. patent No. 1 690 620).

DE-A-2 422 365 discloses polymers suitable for photopolymerisation that have anhydride-containing groups and that are converted by means of mechanically effective light into resistant substances that are suitable as protective printing compounds or for the preparation of protective printing templates for printing plates. No mention is made of their use as a carrier material for the chromatographic separation of enantiomers.

N.R. Bertoniere *et al* describe in J. Appl. Polymer Sci., Vol 15, (1971) 1743, cotton fabrics containing cinnamic acid esters (cinnamoyl radicals) as substituents, which on being irradiated with light of a certain wavelength (2573A) first isomerise and then dimerise to form derivatives of truxillic and truxinic acid, but the photochemical reaction takes place essentially only on the surface of the fabric.

The two U.S. patent specifications Nos. 2 682 481 and 2 682 482 disclose methods by which soluble carbohydrates, especially cellulose derivatives, that carry unsaturated functional groups can be converted by heating with peroxide catalysts and by dimerisation or further cross-linking into shaped articles having an insoluble surface.

H. Engelmann *et al* describe in a publication issued by the Staatliches Forschungsinstitut für makromolekulare Chemie, Freiburg i. Breisgau, (1957), 233, a method of preparing cellulose tricrotonate and cellulose acetocrotonates and the reaction of those products in cross-linking with oxygen or light and the addition of halogens and diamines. It is pointed out that all the products obtained, including those having a very low crotonyl content, are then insoluble in organic solvents. There is no indication of suitability as a carrier material for the chromatographic separation of enantiomers.

In all the publications cited, the starting materials used contain polymerisable groups for the cross-linking, that is to say the cross-linking is effected by polymerisation of one or more double bonds.

The present invention relates to photochemically cross-linked polysaccharide derivatives in which the OH groups as OR groups have been esterified or converted into carbamate (urethane) or mixtures thereof, with the proviso that the OR groups do not contain polymerisable double bonds prior to the cross-linking.

The invention relates especially to photochemically cross-linked polysaccharide derivatives in which the OH groups as OR groups have been converted into an unsubstituted or substituted aryl, arylalkyl, hetaryl or heterarylalkyl ester or into an unsubstituted or substituted aryl, arylalkyl, hetaryl or hetarylalkyl carbamate (urethane) or mixtures thereof, with the proviso that the OR groups do not contain polymerisable double bonds prior to the cross-linking.

Special importance is attached to photochemically cross-linked polysaccharide derivatives in which the OH groups as OR groups have been converted into an unsubstituted or substituted aryl or arylalkyl ester or into an unsubstituted or substituted aryl or arylalkyl carbamate or mixtures thereof, with the proviso that the OR groups do not contain polymerisable double bonds prior to the cross-linking.

Also of special importance are photochemically cross-linked cellulose or amylose derivatives in which the OH groups as OR groups have been converted into an aryl or arylalkyl ester or aryl or arylalkyl carbamate, the ester or carbamate being unsubstituted or mono- or poly-substituted by lower alkyl and/or by halogen, or mixtures thereof, with the proviso that the OR groups do not contain polymerisable double bonds prior to the cross-linking.

Very special importance is attached to photochemically cross-linked cellulose or amylose derivatives in which the OH groups as OR groups have been converted into a phenyl or benzyl ester or phenyl or benzyl carbamate, the ester or carbamate being unsubstituted or mono- or poly-substituted by lower alkyl and/or by halogen, or mixtures thereof, with the proviso that the OR groups do not contain polymerisable double bonds.

In the esterification or carbamate conversion of the OH groups to OR groups, the hydrogen of the OH group is replaced by an acyl radical of the formula R'-C(=O)- or by the acyl radical of carbamic acid R'-NH-C(=O)-.

Hereinabove and hereinbelow, lower radicals and compounds are to be understood as being, for example, those having up to and including 7, preferably up to and including 4, carbon atoms (C atoms).

Polysaccharides are, for example, cellulose, amylose, chitosan, dextrin, xylan and curdlan, chitin and inulin, which are obtainable as polysaccharides in a high degree of purity. Preference is given to the use of polysaccharides having a degree of polymerisation (number of pyranose and furanose rings) of at least the number 5, and especially preferably of at least the number 10, in order to ensure ease of handling.

Lower alkyl is, for example, $C_1$-$C_4$alkyl, such as methyl, ethyl, propyl or butyl, which may be unsubstituted or substituted by halogen, such as fluorine or chlorine, for example trifluoromethyl or trichloromethyl.

Aryl as such is, for example, phenyl or naphthyl, such as 1- or 2-naphthyl, or substituted phenyl or naphthyl, for example phenyl or naphthyl substituted by lower alkyl, halo-lower alkyl, hydroxy, lower alkoxy, lower alkanoyloxy, halogen and/or by cyano.

Aryl is preferably phenyl that is unsubstituted or substituted as indicated above, and is especially phenyl.

Arylalkyl is preferably aryl-lower alkyl, especially phenyl-lower alkyl, more especially phenylethyl or benzyl.

Lower alkoxy is, for example, n-propoxy, isopropoxy, n-butoxy or tert-butoxy, preferably ethoxy and especially methoxy.

Lower alkanoyloxy is, for example, propionyloxy or pivaloyloxy, preferably acetyloxy.

Halogen is, for example, chlorine or fluorine, and also bromine and iodine.

Halo-lower alkyl is, for example, 2- or 3-halo-lower alkyl, for example 2-halopropyl, 3-halopropyl or 3-halo-2-methyl-propyl.

Hetaryl is to be understood as being especially a monocyclic but also a bi- or poly-cyclic radical of aromatic character. Bi- and poly-cyclic hetaryl may be composed of a number of heterocyclic rings or preferably of a heterocycle and one or more, for example one or two but especially one, fused carbocyclic ring, especially a benzo ring. Each individual ring contains, for example, 3, 5, 6, 7 and especially 5 or 6 ring members. Hetaryl is especially an aza-, thia-, oxa-, thiaza-, thiadiaza-, oxaza-, diaza- or tetraza-cyclic radical.

Hetaryl is especially a monocyclic monoaza-, monothia- or monooxa-cyclic radical, for example pyrryl, e.g. 2-pyrryl or 3-pyrryl, pyridyl, e.g. 2-, 3- or 4-pyridyl, thienyl, e.g. 2- or 3-thienyl, or furyl, e.g. 2-furyl; a bicyclic monoaza-, monooxa- or monothia-cyclic radical, e.g. indolyl, e.g. 2- or 3-indolyl, quinolinyl, e.g. 2- or 4-quinolinyl, isoquinolinyl, e.g. 1-isoquinolinyl, benzofuran, e.g. 2- or 3-benzofuranyl, or benzothienyl, e.g. 2- or 3-benzothienyl; a monocyclic diaza-, triaza-, tetraza-, oxaza-, thiaza- or thiadiaza-cyclic radical, such as imidazolyl, e.g. 2-imidazolyl, pyrimidinyl, e.g. 2- or 4-pyrimidinyl, triazolyl, e.g. 1,2,4-triazol-3-yl, tetrazolyl, e.g. 1- or 5-tetrazolyl, oxazolyl, e.g. 2-oxazolyl, isooxazolyl, e.g. 3- or 4-isoxazolyl, thiazolyl, e.g. 2-thiazolyl, isothiazolyl, e.g. 3- or 4-isothiazolyl, or 1,2,4- or 1,3,4-thiadiazolyl, e.g. 1,2,4-thiadiazol-3-yl or 1,3,4-thiadiazol-2-yl, or a bicyclic diaza-, oxaza- or thiaza-cyclic radical, such as benzimidazolyl, e.g. 2-benzimidazolyl, benzoxazolyl, e.g. 2-benzoxazolyl, or benzthiazolyl, e.g. 2-benzthiazolyl.

Hetaryl radicals are unsubstituted or carry substituents. Suitable substituents at ring carbon atoms are, for example, the substituents indicated above for aryl radicals and in addition oxo (=O). Ring nitrogen atoms can be substituted by, for example, lower alkyl, aryl-lower alkyl, lower alkanoyl, benzyl, carboxy, lower alkoxycarbonyl, hydroxy, lower alkoxy, lower alkanoyloxy or by oxido (-O). Hetaryl is especially pyridyl, thienyl, pyrryl or furyl.

Hetarylalkyl radicals are composed of the above-mentioned hetaryl radicals and the aforementioned alkyl radicals, especially lower alkyl radicals. Hetaryl-lower alkyl is especially pyridyl-, thienyl-, pyrryl- or furyl-methyl.

The compounds according to the invention are prepared as follows: polysaccharide derivatives in which the OH groups as OR groups have been esterified or converted into carbamate, after previously being coated onto a carrier or after previous conditioning as pure material using an emulsion, are cross-linked by means of (hv)-irradiation to form the compounds according to the invention.

The cross-linking can be effected by supplying radiation energy of various wavelengths, for example by means of laser beams or preferably by irradiation using a conventional submersible mercury discharge lamp. Suitable suspension agents for the irradiation are, for example, inert solvents, for example hydrocarbons such as hexane or lower alkanols, such as methanol, ethanol, propanol or isopropanol or aqueous mixtures thereof, ethereal solvents, for example diethyl ether, or carbon tetrachloride or acetonitrile.

The photochemical cross-linking can be carried out optionally in the presence of photo-sensitisers, for example in the presence of thioxanthone.

As carriers it is possible to use silicon dioxides, for example silica gel or modified silica gel, especially aminosilanised silica gel, glass and also aluminium oxides (alumina), graphite or zirconium oxide (zirconia).

The polysaccharides used as starting compounds in which the OH groups as OR groups have been esterified or converted into carbamate (urethane) are prepared by esterifying the free OH groups of the polysaccharide compounds or converting them into carbamate (urethane).

The esterification and carbamate formation are carried out in a manner known *per se* by reaction with an isocyanate or with a reactive functional carboxylic acid derivative.

For example, esterification can be effected with unsubstituted or substituted benzoyl halides, especially benzoyl chlorides, the corresponding carboxylic acid anhydrides or alternatively with a mixture of the corresponding carboxylic acid and a suitable dehydrating agent.

For the esterification it is possible to use any inert solvent that does not impede the esterification, it being usual also to add a catalyst, for example a tertiary amine, such as 4-(N,N-dimethylamino)pyridine.

The carbamate formation is usually carried out by reaction with a suitable isocyanate in the presence of a suitable catalyst. As catalyst it is possible to use a Lewis base, for example a tertiary amine, or alternatively a Lewis acid, for example a tin compound, for example dibutyltin dilaurate.

The reaction is preferably carried out in the presence of a tertiary base, for example in the presence of pyridine or quinoline, which act simultaneously as solvent, but it is preferable to use as tertiary base also 4-(N,N-dimethylamino) pyridine which is a reaction accelerator.

For the conversion of the OH groups into the corresponding OR groups by esterification or carbamate formation, there are used, especially, unsubstituted or substituted benzoyl chlorides or phenyl isocyanates.

Chloro- or methyl-substituted phenyl isocyanates or benzoyl chlorides are preferably used, it being possible for the methyl groups and chlorine atoms to be arranged in the meta- or ortho-positions relative to one another.

The photochemically cross-linked polysaccharide derivatives according to the invention are used as chiral carriers for the chromatographic separation of enantiomers.

Surprisingly, by means of the process according to the invention it is possible to immobilise polysaccharide derivatives having no photopolymerisable functional groups, a high degree of stability towards solvents being achieved. Surprisingly the high separation ability is fully retained after the immobilisation.

The immobilisation allows the use of mobile phases that contain, for example, methylene chloride, tetrahydrofuran, chloroform, dioxane or ethyl acetate and that would dissolve non-immobilised polysaccharide derivatives.

The use of such mobile phases gives rise to better results in the enantiomeric separation of a large number of racemates and also allows the dissolution of sparingly soluble samples.

The photochemically cross-linked polysaccharides according to the invention in conditioned form can also be used as pure polymer for the chromatographic separation of enantiomers.

A further possible application is the use of cross-linked polysaccharide derivatives in the production of coatings on various materials, such as wood, paper, plastics and metals. The said coatings can also be photo-structured.

The photochemically cross-linked polysaccharides according to the invention can also be used as a material for the production of various membranes for any type of application.

The various chromatographic enantiomeric separations are described and explained in more detail after the preparative section (Examples).

The following Examples (including the preparation of the starting materials and intermediates) are given for the purposes of illustration and better understanding of the invention. Temperatures are given in degrees Celsius and (unless otherwise indicated) pressures are given in bar.

## Example 1

1.53 g of cellulose tribenzoate (prepared in accordance with known procedures: Chirality, 3 (1991)43) are dissolved in 60 ml of methylene chloride. 4 g of aminosilanised silica (prepared in accordance with a known method from Nucleosil-4000, particle size 10 μm, Macherey-Nagel) are suspended in that solution. The suspension is then concentrated in a rotary evaporator and dried under a high vacuum.

### *Immobilisation*

5 g of the coated material are suspended in a mixture of 100 ml of methanol and 400 ml of water and stirred. The suspension is irradiated for 20 hours with a submersible mercury discharge lamp (Philips, HPK-125 Watt, quartz casing). The suspension is filtered and the filter cake is washed with methanol and dried. In order to remove the non-immobilised material, the irradiated product is then extracted with methylene chloride in a Soxhlet apparatus for 16 hours. The insoluble residue is suspended in about 30 ml of methylene chloride and stirred for about 30 minutes. 300 ml of hexane are then added (rate of addition: 1 ml/min). The product is isolated by filtration and washed with hexane. Elementary analysis: C 6.20%.

## Example 2

Analogously to Example 1, 4.0 g of aminosilanised silica are coated with 1.53 g of cellulose tris(4-methylbenzoate) (prepared in accordance with known procedures: J. Chromatogr., 595 (1992) 63). The photochemical immobilisation of the cellulose derivative is carried out analogously to Example 1 in a mixture of 100 ml of methanol and 300 ml of water. The removal of the non-immobilised material by extraction with methylene chloride and the reconditioning by treatment with hexane are also carried out analogously. Elementary analysis: C 16.97%.

## Example 3

3.0 g of cellulose tris(4-methylbenzoate) beads (prepared in accordance with known procedures: J. Chromatogr., 595 (1992) 63) are suspended in a mixture of 100 ml of methanol and 400 ml of water and stirred. The suspension is irradiated for 20 hours with a submersible mercury discharge lamp (Philips, HPK-125 Watt, quartz casing). The suspension is filtered and the filter cake is washed with methanol and dried. The solid material is then extracted with methylene chloride in a Soxhlet apparatus for 16 hours. The insoluble residue is suspended in about 30 ml of methylene chloride and stirred for about 30 minutes. 300 ml of hexane are then added (rate of addition: 1 ml/min). The product is isolated by filtration and washed with hexane.

## Example 4

Analogously to Example 1, 4.0 g of aminosilanised silica are coated with 1.53 g of cellulose tris(3-methylbenzoate) (prepared in accordance with known procedures: J. Chromatogr., 595 (1992) 63). The photochemical immobilisation of the cellulose derivative is carried out analogously to Example 1 in a mixture of 150 ml of methanol and 300 ml of water. The removal of the non-immobilised material by extraction with methylene chloride and the reconditioning by treatment with hexane are also carried out analogously.
Elementary analysis: C 15.83%.

## Example 5

Analogously to Example 1, 4.0 g of aminosilanised silica are coated with 1.53 g of cellulose tris(2-methylbenzoate) (prepared in accordance with known procedures: J. Chromatogr., 595 (1992) 63). The photochemical immobilisation of the cellulose derivative is carried out analogously to Example 1 in a mixture of 100 ml of methanol and 400 ml of water. The removal of the non-immobilised material by extraction with methylene chloride and the reconditioning by treatment with hexane are also carried out analogously.
Elementary analysis: C 11.66%.

## Example 6

Analogously to Example 1, 4.0 g of aminosilanised silica are coated with 1.53 g of cellulose tris(4-ethylbenzoate) (prepared in accordance with known procedures: J. Chromatogr., 595 (1992) 63). The photochemical immobilisation of the cellulose derivative is carried out analogously to Example 1 in a mixture of 200 ml of methanol and 300 ml of water. The removal of the non-immobilised material by extraction with methylene chloride and the reconditioning by treatment with hexane are also carried out analogously.
Elementary analysis: C 19.24 %.

## Example 7

Analogously to Example 1, 4.0 g of aminosilanised silica are coated with 1.53 g of cellulose tris(4-tert-butylbenzoate) (prepared in accordance with known procedures: J. Chromatogr., 595 (1992) 63). The photochemical immobilisation of the cellulose derivative is carried out analogously to Example 1 in a mixture of 100 ml of methanol and 400 ml of water. The removal of the non-immobilised material by extraction with methylene chloride and the reconditioning by treatment with hexane are also carried out analogously.
Elementary analysis: C 4.41%.

## Example 8

Analogously to Example 1, 4.0 g of aminosilanised silica are coated with 1.53 g of cellulose tris(4-fluorobenzoate) (prepared in accordance with known procedures: J. Chromatogr., 595 (1992) 63). The photochemical immobilisation of the cellulose derivative is carried out analogously to Example 1 in a mixture of 150 ml of methanol and 250 ml of water. The removal of the non-immobilised material by extraction with methylene chloride and the reconditioning by treatment with hexane are also carried out analogously.

## Example 9

Analogously to Example 1, 4.0 g of aminosilanised silica are coated with 1.53 g of cellulose tris(2,5-dichlorobenzoate) (prepared in accordance with known procedures: J. Chromatogr., 595 (1992) 63). The photochemical immobilisation of the cellulose derivative is carried out analogously to Example 1 in a mixture of 150 ml of methanol and 250 ml of water. The removal of the non-immobilised material by extraction with methylene chloride and the reconditioning by treatment with hexane are also carried out analogously.
Elementary analysis: C 12.38%; Cl 7.73%.

**Example 10**

2.4 g of cellulose tris(phenylcarbamate) (prepared in accordance with known procedures: J. Chromatogr., 363 (1986) 173) are dissolved in 36 ml of tetrahydrofuran. The resulting solution is divided into three portions. 5.5 g of aminosilanised silica (Nucleosil-4000, particle size 10 μm, Macherey-Nagel) are in succession mixed with the three portions and then concentrated in a rotary evaporator. After drying *in vacuo,* 7.5 g of product are isolated.

*Immobilisation:*

5.0 g of that material are suspended in 300 ml of hexane (isomeric mixture) and stirred. The suspension is irradiated for 24 hours with a submersible mercury discharge lamp (Philips, HPK-125 Watt, quartz casing). The precipitate is filtered off, washed with hexane and dried. Yield: 4.9 g. That product is extracted with tetrahydrofuran in a Soxhlet apparatus for 17 hours. The insoluble residue is suspended in about 30 ml of tetrahydrofuran, and 300 ml of hexane are added (rate of addition: 1.2 ml/min). The product is isolated by filtration and washed with hexane (3.4 g).

**Example 11**

1.2 g of cellulose tris(phenylcarbamate) (prepared in accordance with known procedures: J. Chromatogr., 363 (1986) 173) are dissolved in 18 ml of tetrahydrofuran. The resulting solution is divided into three portions. 2.75 g of aminosilanised silica (Nucleosil-4000, particle size 10 μm, Macherey-Nagel) are in succession mixed with the three portions and then concentrated in a rotary evaporator. After drying *in vacuo,* 3.7 g of product are isolated.

*Immobilisation:*

3.7 g of that material are suspended together with 37 mg of thioxanthone in 300 ml of hexane (isomeric mixture) and stirred. The suspension is irradiated for 24 hours with a submersible mercury discharge lamp (Philips, HPK-125 Watt, quartz casing). The precipitate is filtered off, washed with hexane and dried. Yield: 3.62 g. That product is extracted with tetrahydrofuran in a Soxhlet apparatus for 17 hours. The insoluble residue is suspended in about 30 ml of tetrahydrofuran, and 300 ml of hexane are added (rate of addition: 1.2 ml/min). The product is isolated by filtration and washed with hexane. Yield: 3.2 g.
Elementary analysis: C 15.53%; H 1.26%; N 1.89%.

**Example 12**

1 g of cellulose tris(3,5-dimethylphenylcarbamate) (prepared in accordance with known procedures: J. Chromatogr., 363 (1986) 173) are dissolved in 13.9 ml of tetrahydrofuran. The resulting solution is divided into three portions. 2.3 g of aminosilanised silica (Nucleosil-4000, particle size 7 μm, Macherey-Nagel) are in succession mixed with the three portions and then concentrated in a rotary evaporator. After drying *in vacuo,* 3.1 g of product are isolated.

*Immobilisation:*

3.1 g of that material are suspended in 250 ml of hexane (isomeric mixture) and stirred. The suspension is irradiated for 24 hours with a submersible mercury discharge lamp (Philips, HPK-125 Watt, quartz casing). The precipitate is filtered off, washed with hexane and dried. Yield: 3.03 g. That product is extracted with tetrahydrofuran in a Soxhlet apparatus for 17 hours. The insoluble residue is suspended in about 30 ml of tetrahydrofuran, and 300 ml of hexane are added (rate of addition: 1.2 ml/min). The product is isolated by filtration and washed with hexane (2.6 g).
Elementary analysis: C 13.64%; H 1.27%; N 1.43%.

**Example 13**

7.5 g of cellulose tris(3,5-dimethylphenylcarbamate) beads (prepared in accordance with a known procedure:) are suspended together with 150 mg of thioxanthone in 300 ml of hexane (isomeric mixture) and stirred.The suspension is irradiated for 24 hours with a submersible mercury discharge lamp (Philips, HPK-125 Watt, quartz casing). The suspension is filtered and the filter cake is washed with isopropanol and hexane and dried. The solid material is then extracted with tetrahydrofuran in a Soxhlet apparatus for 16 hours. The insoluble residue is suspended in about 70 ml of tetrahydrofuran and stirred for about 30 minutes. 500 ml of hexane are then added (rate of addition: 1 ml/min). The product is isolated by filtration and washed with hexane.

## Example 14

2.83 g of cellulose tris(4-methylphenylcarbamate) (prepared in accordance with known procedures: J. Chromatogr., 363 (1986) 173) are dissolved in 50 ml of tetrahydrofuran. The resulting solution is divided into three portions. 8.5 g of aminosilanised silica (Nucleosil-4000, particle size 10 μm, Macherey-Nagel) are in succession mixed with the three portions and then concentrated in a rotary evaporator. After drying *in vacuo,* 1.1 g of product are isolated.

### *Immobilisation A:*

4.0 g of that material are suspended in 300 ml of hexane (isomeric mixture) and stirred. The suspension is irradiated for 24 hours with a submersible mercury discharge lamp (Philips, HPK-125 Watt, quartz casing). The precipitate is filtered off, washed with hexane and dried. Yield: 3.93 g. That product is extracted with tetrahydrofuran in a Soxhlet apparatus for 22 hours. The insoluble residue is suspended in about 30 ml of tetrahydrofuran, and 300 ml of hexane are added (rate of addition: 1.2 ml/min). The product is isolated by filtration and washed with hexane (3.50 g).

### *Immobilisation B:*

4.0 g of that material are suspended together with 40 mg of thioxanthone in 300 ml of hexane (isomeric mixture) and stirred. The suspension is irradiated for 24 hours with a submersible mercury discharge lamp (Philips, HPK-125 Watt, quartz casing). The precipitate is filtered off, washed with hexane and dried. Yield: 3.9 g. That product is extracted with tetrahydrofuran in a Soxhlet apparatus for 24 hours. The insoluble residue is suspended in about 30 ml of tetrahydrofuran, and 300 ml of hexane are added (rate of addition: 1.2 ml/min). The product is isolated by filtration and washed with hexane. Yield: 3.8 g.
Elementary analysis: C 14.75%; H 1.31%; N 1.56%.

## Example 15

3.3 g of cellulose tris(4-chlorophenylcarbamate) (prepared in accordance with known procedures: J. Chromatogr., 363 (1986) 173) are dissolved in 50 ml of tetrahydrofuran. The resulting solution is divided into three portions. 7.7 g of aminosilanised silica (Nucleosil-4000, particle size 10 μm, Macherey-Nagel) are in succession mixed with the three portions and then concentrated in a rotary evaporator. After drying *in vacuo,* 10.6 g of product are isolated.

### *Immobilisation A:*

4.0 g of that material are suspended in 300 ml of hexane (isomeric mixture) and stirred. The suspension is irradiated for 24 hours with a submersible mercury discharge lamp (Philips, HPK-125 Watt, quartz casing). The precipitate is filtered off, washed with hexane and dried. Yield: 3.89 g. That product is extracted with tetrahydrofuran in a Soxhlet apparatus for 18 hours. The insoluble residue is suspended in about 30 ml of tetrahydrofuran, and 300 ml of hexane are added (rate of addition: 1.2 ml/min). The product is isolated by filtration and washed with hexane (3.6 g).

### *Immobilisation B:*

4.0 g of that material are suspended together with 40 mg of thioxanthone in 300 ml of hexane (isomeric mixture) and stirred. The suspension is irradiated for 24 hours with a submersible mercury discharge lamp (Philips, HPK-125 Watt, quartz casing). The precipitate is filtered off, washed with hexane and dried. Yield: 3.8 g. That product is extracted with tetrahydrofuran in a Soxhlet apparatus for 20 hours. The insoluble residue is suspended in about 30 ml of tetrahydrofuran, and 300 ml of hexane are added (rate of addition: 1.2 ml/min). The product is isolated by filtration and washed with hexane. Yield: 3.2 g.
Elementary analysis: C 9.88%, N 1.18%, Cl 2.90%.

## Example 16

2.3 g of cellulose tris(3-chloro-4-methylphenylcarbamate) (prepared in accordance with known procedures:

J. Chromatogr., 363 (1986) 173) are dissolved in 48 ml of tetrahydrofuran. The resulting solution is divided into three portions. 8.1 g of aminosilanised silica (Nucleosil-4000, particle size 10 μm, Macherey-Nagel) are in succession mixed with the three portions and then concentrated in a rotary evaporator. After drying *in vacuo,* 10.1 g of product are isolated.

### Immobilisation A:

3.9 g of that material are suspended in 300 ml of hexane (isomeric mixture) and stirred. The suspension is irradiated for 24 hours with a submersible mercury discharge lamp (Philips, HPK-125 Watt, quartz casing). The precipitate is filtered off, washed with hexane and dried. Yield: 3.65 g. That product is extracted with tetrahydrofuran in a Soxhlet apparatus for 17 hours. The insoluble residue is suspended in about 30 ml of tetrahydrofuran, and 300 ml of hexane are added (rate of addition: 1.2 ml/min). The product is isolated by filtration and washed with hexane (3.4 g).

### Immobilisation B:

3.6 g of that material are suspended together with 36 mg of thioxanthone in 300 ml of hexane (isomeric mixture) and stirred. The suspension is irradiated for 24 hours with a submersible mercury discharge lamp (Philips, HPK-125 Watt, quartz casing). The precipitate is filtered off, washed with hexane and dried. Yield: 3.41 g. That product is extracted with tetrahydrofuran in a Soxhlet apparatus for 17 hours. The insoluble residue is suspended in about 30 ml of tetrahydrofuran, and 300 ml of hexane are added (rate of addition: 1.2 ml/min). The product is isolated by filtration and washed with hexane. Yield: 3.3 g.
Elementary analysis: C 11.95%, N 1.26%, Cl 3.12%.

### Example 17

1.2 g of amylose tris(3,5-dimethylphenylcarbamate) (prepared in accordance with known procedures: Chem. Lett. 1987, 1857) are dissolved in a mixture of 15 ml of tetrahydrofuran and 15 ml of methylene chloride. The resulting solution is divided in three portions. 3.6 g of aminosilanised silica (Nucleosil-4000, particle size 10 μm, Macherey-Nagel) are in succession mixed with the three portions and then concentrated in a rotary evaporator. After drying *in vacuo,* 4.4 g of product are isolated.

### Immobilisation:

4.1 g of that material are suspended together with 41 mg of thioxanthone in 300 ml of hexane (isomeric mixture) and stirred. The suspension is irradiated for 24 hours with a submersible mercury discharge lamp (Philips, HPK-125 Watt, quartz casing). The precipitate is filtered off, washed with hexane and dried. Yield: 4.1 g. That product is extracted in a Soxhlet apparatus with methylene chloride for 17 hours and then with tetrahydrofuran for 22 hours. The insoluble residue is suspended in about 30 ml of tetrahydrofuran, and 300 ml of hexane are added (rate of addition: 1.2 ml/min). The product is isolated by filtration and washed with hexane. Yield: 3.8 g.
Elementary analysis: C 13.01; H 1.26; N 1.34

### Column packing:

2.5 g of the material obtained are made into a slurry in 25 ml of hexane/2-propanol (90:10, % by vol.) or in chloroform/heptane (50:50, % by vol.) and using the slurry method introduced into a steel column (25 cm x 0.4 cm) at a pressure of 100 bar.

### Example 18

2 g of amylose (mol. wt. - 150 000, Serva) are dried at 130°C for 6 hours in a roundbottomed flask while being flushed through with nitrogen. There are then added in the given order at room temperature: 25 ml of pyridine, 0.1 ml of dibutyltin laurate and 10 ml of (S)-1-phenylethyl isocyanate. The suspension is boiled at reflux (bath temperature 130°C) for 72 hours. After cooling the solution at 60°C, 50 ml of methanol are added and the resulting suspension is poured into 300 ml of methanol. The suspension is filtered and washed with methanol. The solid residue is dissolved in 120 ml of methylene chloride. The resulting solution is filtered and precipitated in 500 ml of methanol. The precipitate is filtered off and washed with methanol. The filter cake is again dissolved in 120 ml of methylene chloride and precipitated with 500 ml of ethanol. The precipitate is filtered off, washed with ethanol and dried under a high vacuum at 60°C. Yield: 4 g. Elementary analysis: calc. C 65.66; H 6.18; N 6.96; found C 64.74; H 6.28; N 6.77.
2 g of amylose tris((S)-1-phenylethylcarbamate) are dissolved in a mixture of 30 ml of tetrahydrofuran and 30 ml of methylene chloride. The resulting solution is divided into three portions. 6.6 g of aminosilanised silica (Nucleosil-4000, particle size 7 mm, Macherey-Nagel) are in succession mixed with the three portions and then concentrated in a rotary evaporator. After drying *in vacuo,* 8.3 g of product are isolated.

*Immobilisation:*

3.2 g of that material are suspended together with 32 mg of thioxanthone in a mixture of methanol/water (175 ml each) and stirred (400 rev/min). The suspension is irradiated for 21 hours with a submersible mercury discharge lamp (Philips, HPK-125 Watt, quartz casing). The precipitate is filtered off, washed with 100 ml of ethanol and dried. Yield: 3.28 g. That product is extracted with tetrahydrofuran in a Soxhlet apparatus for 15 hours. The insoluble residue is suspended in about 30 ml of tetrahydrofuran, and 300 ml of hexane are added (rate of addition: 1.6 ml/min). The product is isolated by filtration and washed with hexane. Yield: 3.1 g (76.9% immobilisation).

*Testing of the chiral stationary phases:*

The phases from Examples 2, 4, 6, 11, 12, 14-17 are tested with various racemic structures and with various mobile phases (see Tables).
HPLC chromatography is carried out using a Shimadzu LC-6A system with a flow rate of 0.7 ml/min. and at room temperature. Detection is effected by means of UV spectroscopy and polarimetry (Perkin Elmer 241 LC). The separation factor a is determined as the measurement value.

$$\alpha = \frac{k'_2}{k'_1} = \frac{t_2 - t_0}{t_1 - t_0}$$

where $k'_2$ and $k'_1$ are the respective capacity factors of the second and first eluted enantiomers and $t_2$ and $t_1$ are the retention times thereof. $t_0$ is the elution time of tri-tert-butylbenzene (non-retained compound).

## Separation factor in chromatographic separations using the product of Example 2

| Mobile phase | hexane/ 2-propanol 9:1 | heptane/ chloroform 6:4 |
|---|---|---|
| | insoluble | 1.21 |
| | - | 1.59 |
| | 2.11 | 1.28 |

| Mobile phase | hexane/ 2-propanol 9:1 | heptane/ chloroform 6:4 |
|---|---|---|
| (structure) | 6.43 | 1.40 |
| (structure) | 1.29 | 1.19 |
| (structure) | 1.28 | 1.0 |
| (structure) | 1.37 | 1.0 |
| (structure) | 1.37 | 1.0 |
| (structure) | 1.72 | 1.51 |
| (structure) | 1.59 | 1.57 |

**Separation factor in chromatographic separations using the product of Example 4**

| Mobile phase | heptane/ chloroform/ ethanol 60:40:3 | heptane/ chloroform/ ethanol 65:35:1 | heptane/ chloroform/ ethanol 75:25:0.5 | heptane/ chloroform 75:25 | chloroform/ heptane 9:1 | hexane/ 2-propanol 9:1 |
|---|---|---|---|---|---|---|
| (structure) | - | - | 1.0 | - | 1.38 | 1.25 |

| Mobile phase | heptane/ chloroform/ ethanol 60:40:3 | heptane/ chloroform/ ethanol 65:35:1 | heptane/ chloroform/ ethanol 75:25:0.5 | heptane/ chloroform 75:25 | chloroform/ heptane 9:1 | hexane/ 2-propanol 9:1 |
|---|---|---|---|---|---|---|
| (structure: methyl 1-(3,5-bis(trifluoromethyl)phenyl)pyrrolidin-5-one-3-carboxylate, H₃COOC, N, CF₃) | 1.0 | 1.08 | 1.15 | 1.19 | 1.16 | 1.17 |
| (structure: 1-(naphthalen-2-yl)ethanol, CH₃, OH) | 1.18 | 1.22 | 1.24 | 1.23 | 1.23 | 1.41 |
| (structure: stilbene oxide / 2,3-diphenyloxirane) | 1.38 | 1.55 | 1.96 | 1.89 | 2.05 | 2.12 |
| (structure: 2-(2-chlorophenyl)-3-(4-chlorophenyl)oxirane, Cl, O, Cl) | 1.0 | 1.0 | 1.36 | 1.30 | 1.53 | 1.54 |
| (structure: 3-ethyl-3-phenylpiperidine-2,6-dione, Et, phenyl, O, N, H, O) | 1.37 | 1.38 | 1.42 | 1.39 | | 1.39 |
| (structure: thalidomide, 2-(2,6-dioxopiperidin-3-yl)isoindoline-1,3-dione, O, N, O, O, N, H, O) | 1.24 | 1.22 | | | insoluble | insoluble |
| (structure: 1-(naphthalen-1-yl)ethanol, HO, CH₃) | 1.49 | 1.60 | 1.72 | 1.71 | 1.71 | 1.56 |

## Separation factor in chromatographic separations using the product of Example 6

| Mobile phase | heptane/ chloroform/ ethanol 60:40:3 |
|---|---|
| | 1.45 |
| | 1.0 |
| | 1.29 |
| | 1.45 |

## Separation factor in chromatographic separations using the product of Example 9

| Mobile phase | heptane/ chloroform 70:30 |
|---|---|
| | 1.13 |
| | 1.17 |

| Mobile phase | heptane/ chloroform 70:30 |
|---|---|
| | 1.43 |

## Separation factor in chromatographic separations using the product of Example 11

| Mobile phase | hexane/ 2-propanol 9:1 | chloroform/ heptane 1:1 |
|---|---|---|
| | 1.46 | 1.50 |
| | 1.27 | 1.0 |
| | 1.45 | 2.06 |
| | 1.0 | 1.24 |
| | 2.00 | 2.22 |
| | 1.18 | 1.24 |

## Separation factor in chromatographic separations using the product of Example 12

| Mobile phase | hexane/ 2-propanol 9:1 | chloroform/ heptane 1:1 | heptane/ THF/ 2-propanol 85:15:1 |
|---|---|---|---|
| | 1.46 | 1.48 | 1.67 |
| | 1.15 | 1.40 | 1.00 |
| | 1.40 | 1.23 | 1.30 |
| | 1.52 | 1.51 | 1.00 |
| | 2.56 | 2.96 | 2.11 |
| | 2.38 | 2.09 | 1.90 |
| | 1.40 | 1.63 | 1.55 |
| | 2.76 | 6.45 | 2.04 |

| Mobile phase | hexane/ 2-propanol 9:1 | chloroform/ heptane 1:1 | heptane/ THF/ 2-propanol 85:15:1 |
|---|---|---|---|
| (structure: HO–CH₃ naphthalene) | 1.62 | 1.34 | 1.66 |

**Separation factor in chromatographic separations using the product of Example 14**

| Immobilisation method | A | B | B |
|---|---|---|---|
| Mobile phase | hexane/ 2-propanol 9:1 | hexane/ 2-propanol 9:1 | chloroform/ heptane 1:1 |
| (structure) | 1.40 | 1.21 | 1.0 |
| (structure) | 1.45 | 1.37 | 1.0 |
| (structure) | 1.52 | 1.49 | 1.58 |
| (structure) | 1.42 | 1.35 | 1.0 |
| (structure) | 1.22 | 1.31 | 1.39 |
| (structure) | 1.37 | 1.23 | 1.36 |

| Immobilisation method | A | B | B |
|---|---|---|---|
| Mobile phase | hexane/ 2-propanol 9:1 | hexane/ 2-propanol 9:1 | chloroform/ heptane 1:1 |
| | 2.39 | 2.11 | 2.48 |
| | 1.22 | 1.21 | 1.23 |

**Separation factor in chromatographic separations using the product of Example 15**

| Immobilisation method | A | A | B | B |
|---|---|---|---|---|
| Mobile phase | hexane/ 2-propanol 9:1 | chloroform/ heptane 1:1 | hexane/ 2-propanol 9:1 | chloroform/ heptane 1:1 |
| | 1.64 | 1.39 | 1.49 | 1.0 |
| | 1.39 | 1.30 | 1.0 | 1.20 |
| | 1.44 | 1.45 | 1.31 | 1.29 |
| | 1.24 | 1.74 | 1.19 | 1.87 |
| | 1.0 | 1.32 | 1.0 | 1.18 |

| Immobilisation method | A | A | B | B |
|---|---|---|---|---|
| Mobile phase | hexane/ 2-propanol 9:1 | chloroform/ heptane 1:1 | hexane/ 2-propanol 9:1 | chloroform/ heptane 1:1 |
| HO—CH(CF$_2$CF$_3$)-anthracene | 1.74 | 2.03 | 1.0 | 1.43 |

**Separation factor in chromatographic separations using the product of Example 16**

| Immobilisation method | A | A | B | B |
|---|---|---|---|---|
| Mobile phase | hexane/ 2-propanol 9:1 | chloroform/ heptane 1:1 | hexane/ 2-propanol 9:1 | chloroform/ heptane 1:1 |
| stilbene oxide | 1.79 | 1.86 | 1.51 | 1.0 |
| HO—CH(CF$_3$)-anthracene | 1.36 | 1.42 | 1.29 | 1.42 |
| pyridyl ketone ether (Cl, Cl, Et) | 1.31 | 1.24 | 1.25 | 1.18 |
| benzoxazine (N-CH$_3$, O=C-CH$_3$) | 1.09 | 1.16 | 1.08 | 1.43 |
| HO—CH(CF$_2$CF$_3$)-anthracene | 1.47 | 1.91 | 1.54 | 2.02 |
| HO—CH(CH$_3$)-naphthalene | 1.22 | 1.18 | 1.16 | 1.15 |

**Separation factor in chromatographic separations using the product of Example 17**

| Mobile phase | hexane/ 2-propanol 9:1 | chloroform/ heptane 1:1 | hexane/ dichloromethane/ 2-propanol 80:20:2.5 |
|---|---|---|---|
| (structure: stilbene oxide) | 1.61 | 1.0 | 1.20 |
| (structure: anthracene CF₃ carbinol) | 1.0 | 1.29 | 1.20 |
| (structure: naphthalene CH₃ carbinol) | 1.45 | 2.19 | 1.73 |

**Separation factor in chromatographic separations using the product of Example 18**

| Mobile phase | hexane/ 2-propanol 9:1 | heptane/ chloroform/ 2-propanol 75:25:1 | heptane/ chloroform 1:1 |
|---|---|---|---|
| (structure: dimethyl benzodiazepine) | 1.85 | 1.62 | 1.57 |
| (structure: binaphthol) | 1.19 | 1.23 | 1.23 |

| Mobile phase | hexane/ 2-propanol 9:1 | heptane/ chloroform/ 2-propanol 75:25:1 | heptane/ chloroform 1:1 |
|---|---|---|---|
| HO CF$_3$ (anthracene structure) | 1.40 | 1.59 | 1.54 |
| OH, phenyl, O, O (methyl mandelate structure) | 1.10 | 1.31 | 1.39 |
| O, OH (benzoin structure) | 1.50 | 1.54 | 1.56 |
| O, O, NH, O (imide structure) | 1.86 | 2.01 | 2.00 |
| HO CF$_2$CF$_3$ (anthracene structure) | 2.21 | 2.56 | 2.47 |
| O O, O, CH$_2$COCH$_3$ (coumarin structure) | 2.93 | 3.87 | 3.85 |

**Claims**

1. A photochemically cross-linked polysaccharide derivative in which the OH groups as OR groups have been esterified or converted into carbamate (urethane) or mixtures thereof, with the proviso that the OR groups do not contain polymerisable double bonds prior to the cross-linking.

2. A photochemically cross-linked polysaccharide derivative in which the OH groups as OR groups have been converted into an unsubstituted or substituted aryl, arylalkyl, hetaryl or heterarylalkyl ester or into an unsubstituted or substituted aryl, arylalkyl, hetaryl or hetarylalkyl carbamate (urethane) or mixtures thereof, with the proviso that the OR groups do not contain polymerisable double bonds prior to the cross-linking.

3. A photochemically cross-linked polysaccharide derivative in which the OH groups as OR groups have been converted into an unsubstituted or substituted aryl or arylalkyl ester or into an unsubstituted or substituted aryl or arylalkyl carbamate or mixtures thereof, with the proviso that the OR groups do not contain polymerisable double bonds prior to the cross-linking.

4. A photochemically cross-linked cellulose or amylose derivative in which the OH groups as OR groups have been converted into an aryl or arylalkyl ester or aryl or arylalkyl carbamate, the ester or carbamate being unsubstituted or mono- or poly-substituted by lower alkyl, having up to and including 7 carbon atoms, and/or by halogen, or mixtures thereof, with the proviso that the OR groups do not contain polymerisable double bonds prior to the cross-linking.

5. A photochemically cross-linked cellulose or amylose derivative in which the OH groups as OR groups have been converted into a phenyl or benzyl ester or phenyl or benzyl carbamate, the ester or carbamate being unsubstituted or mono- or poly-substituted by lower alkyl, having up to and including 7 carbon atoms, and/or by halogen, or mixtures thereof, with the proviso that the OR groups do not contain polymerisable double bonds prior to the cross-linking.

6. A process for the preparation of a photochemically cross-linked polysaccharide derivative according to claim 1, wherein a polysaccharide derivative in which the OH groups as OR groups have been esterified or converted into carbamate (urethane), after previously being coated onto a carrier or after previous conditioning as pure material using an emulsion, is cross-linked by means of (hv)-irradiation to form a compound according to claim 1.

7. A process according to claim 6, wherein a polysaccharide derivative in which the OH groups as OR groups have been converted into an unsubstituted or substituted aryl, arylalkyl, hetaryl or hetarylalkyl ester or into an unsubstituted or substituted aryl, arylalkyl, hetaryl or hetarylalkyl carbamate, after previously being coated onto a carrier or after previous conditioning as pure material using an emulsion, is cross-linked by means of (hv)-irradiation to form a compound of claim 2.

8. A process according to claim 6, wherein a polysaccharide derivative in which the OH groups as OR groups have been converted into an unsubstituted or substituted aryl or arylalkyl ester or into an unsubstituted or substituted aryl or arylalkyl carbamate, after previously being coated onto a carrier or after previous conditioning as pure material using an emulsion, is cross-linked by means of (hv)-irradiation to form a compound of claim 3.

9. A process according to claim 6, wherein a cellulose or amylose derivative in which the OH groups as OR groups have been converted into an aryl or arylalkyl ester that is unsubstituted or mono- or poly-substituted by lower alkyl, having up to and including 7 carbon atoms, and/or by halogen or into an aryl or arylalkyl carbamate that is unsubstituted or mono- or poly-substituted by lower alkyl, having up to and including 7 carbon atoms, and/or by halogen, after previously being coated onto a carrier or after previous conditioning as pure material using an emulsion, is cross-linked by means of (hv)-irradiation to form a compound of claim 4.

10. A process according to claim 6, wherein a cellulose or amylose derivative in which the OH groups as OR groups have been converted into a phenyl or benzyl ester that is unsubstituted or mono- or poly-substituted by lower alkyl, having up to and including 7 carbon atoms, and/or by halogen or into a phenyl or benzyl carbamate that is unsubstituted or mono- or poly-substituted by lower alkyl, having up to and including 7 carbon atoms, and/or by halogen, after previously being coated onto a carrier or after previous conditioning as pure material using an emulsion, is cross-linked by means of (hv)-irradiation to form a compound of claim 5.

11. A process according to any one of claims 6 to 10, wherein the cross-linking is effected by irradiation by means of a submersible mercury discharge lamp.

12. A process according to any one of claims 6 to 10, wherein the cross-linking is effected by irradiation by means of a laser lamp.

13. A process according to any one of claims 6 to 10, wherein the cross-linking is effected in the presence of a photosensitiser.

14. A process according to any one of claims 6 to 10, wherein the carrier used for the coating is silica gel, modified silica gel, aluminium oxide (alumina), glass, graphite or zirconium oxide.

15. A process according to any one of claims 6 to 10, wherein an inert solvent is used for the preparation of a suspension.

16. The use of a photochemically cross-linked polysaccharide derivative according to any one of claims 1 to 5 as a stationary phase in chromatographic procedures, especially for the separation of enantiomers.

**17.** The use of a photochemically cross-linked polysaccharide derivative according to any one of claims 1 to 5 as a material for the preparation of membranes for various types of application.

**18.** The use of a photochemically cross-linked polysaccharide derivative according to any one of claims 1 to 5 in the preparation of coatings on various materials, for example wood, paper, plastics and metals.

**Patentansprüche**

**1.** Photochemisch vernetztes Polysaccharidderivat, worin die OH-Gruppen in Form von OR-Gruppen verestert oder zu Carbamat (Urethan) oder Gemischen hiervon umgewandelt sind, wobei gilt, daß die OR-Gruppen vor der Vernetzung keine polymerisierbaren Doppelbindungen enthalten.

**2.** Photochemisch vernetztes Polysaccharidderivat, worin die OH-Gruppen in Form von OR-Gruppen in einen nichtsubstituierten oder substituierten Aryl-, Arylalkyl-, Heteroaryl- oder Heteroarylalkylester oder in ein nichtsubstituiertes oder substituiertes Aryl-, Arylalkyl-, Heteroaryl- oder Heteroarylalkylcarbamat (-urethan) oder Gemische hiervon umgewandelt sind, wobei gilt, daß die OR-Gruppen vor der Vernetzung keine polymerisierbaren Doppelbindungen enthalten.

**3.** Photochemisch vernetztes Polysaccharidderivat, worin die OH-Gruppen in Form von OR-Gruppen in einen nichtsubstituierten oder substituierten Aryl- oder Arylalkylester oder in ein nichtsubstituiertes oder substituiertes Aryl- oder Arylalkylcarbamat oder Gemische hiervon umgewandelt sind, wobei gilt, daß die OR-Gruppen vor der Vernetzung keine polymerisierbaren Doppelbindungen enthalten.

**4.** Photochemisch vernetztes Cellulose- oder Amylosederivat, worin die OH-Gruppen in Form von OR-Gruppen in einen Aryl- oder Arylalkylester oder ein Aryl- oder Arylalkylcarbamat, wobei der Ester oder das Carbamat nichtsubstituiert oder durch Niedrigalkylgruppen mit bis zu einschließlich 7 Kohlenstoffatomen und/oder Halogenatome ein- oder mehrfach substituiert sind, oder Gemische hiervon umgewandelt sind, wobei gilt, daß die OR-Gruppen vor der Vernetzung keine polymerisierbaren Doppelbindungen enthalten.

**5.** Photochenusch vernetztes Cellulose- oder Amylosederivat, worin die OH-Gruppen in Form von OR-Gruppen in einen Phenyl- oder Benzylester oder in ein Phenyl- oder Benzylcarbamat, wobei der Ester oder das Carbamat nichtsubstituiert oder durch Niedrigalkylgruppen mit bis zu einschließlich 7 Kohlenstoffatomen und/oder Halogenatome ein- oder mehrfach substituiert sind, oder Gemische hiervon umgewandelt sind, wobei gilt, daß die OR-Gruppen vor der Vernetzung keine polymerisierbaren Doppelbindungen enthalten.

**6.** Verfahren zur Herstellung eines photochemisch vernetzten Polysaccharidderivats nach Anspruch 1, wobei ein Polysaccharidderivat, worin die OH-Gruppen in Form von OR-Gruppen verestert oder zu Carbamat (Urethan) umgewandelt wurden, nach vorhergehendem Auftragen auf einen Träger oder nach vorhergehendem Konditionieren als Reinmaterial unter Verwendung einer Emulsion mit Hilfe von hυ-Strahlung vernetzt wird, wobei eine Verbindung nach Anspruch 1 erhalten wird.

**7.** Verfahren nach Anspruch 6, wobei ein Polysaccharidderivat, worin die OH-Gruppen in Form von OR-Gruppen in einen nichtsubstituierten oder substituierten Aryl-, Arylalkyl-, Heteroaryl- oder Heteroarylalkylester oder in ein nichtsubstituiertes oder substituiertes Aryl-, Arylalkyl-, Heteroaryl- oder Heteroarylalkylcarbamat umgewandelt sind, nach vorhergehendem Auftragen auf einen Träger oder nach vorhergehendem Konditionieren als Reinmaterial unter Verwendung einer Emulsion mit Hilfe von hυ-Strahlung unter Bildung einer Verbindung nach Anspruch 2 vernetzt wird.

**8.** Verfahren nach Anspruch 6, wobei ein Polysaccharidderivat, worin die OH-Gruppen in Form von OR-Gruppen in einen nichtsubstituierten oder substituierten Aryl- oder Arylalkylester oder in ein nichtsubstituiertes oder substituiertes Aryl- oder Arylalkylcarbamat umgewandelt sind, nach vorhergehendem Auftragen auf einen Träger oder nach vorhergehendem Konditionieren als Reinmaterial unter Verwendung einer Emulsion mit Hilfe von hυ-Strahlung unter Bildung einer Verbindung nach Anspruch 3 vernetzt wird.

**9.** Verfahren nach Anspruch 6, wobei ein Cellulose- oder Amylosederivat, worin die OH-Gruppen in Form von OR-Gruppen in einen Aryl- oder Arylalkylester, der nichtsubstituiert oder durch Niedrigalkylgruppen mit bis zu einschließlich 7 Kohlenstoffatomen und/oder durch Halogenatome ein- oder mehrfach substituiert ist, oder in ein Aryl- oder Arylalkylcarbamat, das nichtsubstituiert oder durch Niedrigalkylgruppen mit bis zu einschließlich 7 Kohlenstoffatomen und/oder durch Halogenatome ein- oder mehrfach substituiert ist, umgewandelt sind, nach vorhergehendem Auftragen auf einen Träger oder nach vorgehendem Konditionieren als Reinmaterial unter Verwendung einer Emulsion mit Hilfe von hυ-Strahlung unter Bildung einer Verbindung nach Anspruch 4 vernetzt wird.

10. Verfahren nach Anspruch 6, wobei ein Cellulose- oder Amylosederivat, worin die OH-Gruppen in Form von OR-Gruppen in einen Phenyl- oder Benzylester, der nichtsubstituiert oder durch Niedrigalkylgruppen mit bis zu einschließlich 7 Kohlenstoffatomen und/oder durch Halogenatome ein- oder mehrfach substituiert ist, oder in ein Phenyl- oder Benzylcarbamat, das nichtsubstituiert oder durch Niedrigalkylgruppen mit bis zu einschließlich 7 Kohlenstoffatomen und/oder durch Halogenatome ein- oder mehrfach substituiert ist, umgewandelt sind, nach vorgehendem Auftragen auf einen Träger oder nach vorgehendem Konditionieren als Reinmaterial unter Verwendung einer Emulsion nut Hilfe von hυ-Strahlung unter Bildung einer Verbindung nach Anspruch 5 vernetzt wird.

11. Verfahren nach einem der Ansprüche 6 bis 10, wobei das Vernetzen durch Bestrahlen mit Hilfe einer Behälterquarzentladungslampe erfolgt.

12. Verfahren nach einem der Ansprüche 6 bis 10, wobei das Vernetzen durch Bestrahlen mit Hilfe einer Laserlampe erfolgt.

13. Verfahren nach einem der Ansprüche 6 bis 10, wobei das Vernetzen in Gegenwart eines Photosensibilisators durchgeführt wird.

14. Verfahren nach einem der Ansprüche 6 bis 10, wobei der zum Beschichten verwendete Träger Silicagel, modifiziertes Silicagel, Aluminiumoxid (Tonerde), Glas, Graphit oder Zirconiumoxid ist.

15. Verfahren nach einem der Ansprüche 6 bis 10, wobei ein inertes Lösungsmittel zur Herstellung einer Suspension verwendet wird.

16. Verwendung eines photochemisch vernetzten Polysaccharidderivats nach einem der Ansprüche 1 bis 5 als stationäre Phase in chromatographischen Verfahren, insbesondere zur Trennung von Enantiomeren.

17. Verwendung eines photochemisch vernetzten Polysaccharidderivats nach einem der Ansprüche 1 bis 5 als Material zur Herstellung von Membranen für verschiedene Anwendungsarten.

18. Verwendung eines photochemisch vernetzten Polysaccharidderivats nach einem der Ansprüche 1 bis 5 bei der Herstellung von Überzügen auf verschiedenen Materialien, beispielsweise Holz, Papier, Kunststoff und Metallen.

## Revendications

1. Un dérivé de polysaccharide réticulé photochimiquement dans lequel les groupes OH en tant que groupes OR ont été estérifiés ou transformés en carbamate (uréthane) ou leurs mélanges, avec la condition que les groupes OR ne contiennent pas de doubles liaisons polymérisables avant la réticulation.

2. Un dérivé de polysaccharide réticulé photochimiquement dans lequel les groupes OH en tant que groupes OR ont été transformés en ester arylique, arylalkylique, hétarylique ou héterarylalkylique non substitués ou substitués ou en aryl-, arylalkyl-, hétaryl- ou hétarylalkyl-carbamate (uréthane) non substitués ou substitués ou leurs mélanges, avec la condition que les groupes OR ne contiennent pas de doubles liaisons polymérisables avant la réticulation.

3. Un dérivé de polysaccharide réticulé photochimiquement dans lequel les groupes OH en tant que groupes OR ont été transformés en ester arylique ou arylalkylique non substitués ou substitués ou en aryl- ou arylalkyl-carbamate non substitués ou substitués ou leurs mélanges, avec la condition que les groupes OR ne contiennent pas de doubles liaisons polymérisables avant la réticulation.

4. Un dérivé de la cellulose ou de l'amylose réticulé photochimiquement dans lequel les groupes OH en tant que groupes OR ont été transformés en ester arylique ou arylalkylique ou en aryl- ou arylalkyl-carbamate, l'ester ou le carbamate étant non substitué ou mono- ou polysubstitué par un groupe alkyle inférieur ayant jusqu'à 7 atomes de carbone, et/ou par un halogène, ou leurs mélanges, avec la condition que les groupes OR ne contiennent pas de doubles liaisons polymérisables avant la réticulation.

**5.** Un dérivé de la cellulose ou de l'amylose réticulé photochimiquement dans lequel les groupes OH en tant que groupes OR ont été transformés en ester phénylique ou benzylique ou en phényl- ou benzyl-carbamate, l'ester ou le carbamate étant non substitué ou mono- ou polysubstitué par un groupe alkyle inférieur ayant jusqu'à 7 atomes de carbone, et/ou par un halogène, ou leurs mélanges, avec la condition que les groupes OR ne contiennent pas de doubles liaisons polymérisables avant la réticulation.

**6.** Un procédé de préparation d'un dérivé de polysaccharide réticulé photochimiquement selon la revendication 1, caractérisé en ce qu'un dérivé de polysaccharide où les groupes OH en tant que groupes OR ont été estérifiés ou transformés en carbamate (uréthane), après avoir été enrobé au préalable sur un véhicule ou après avoir été conditionné au préalable sous forme d'une matière pure en utilisant une émulsion, est réticulé par irradiation hv pour former un composé selon la revendication 1.

**7.** Un procédé selon la revendication 6, caractérisé en ce qu'un dérivé de polysaccharide où les groupes OH en tant que groupes OR ont été transformés en ester arylique, arylalkylique, hétarylique ou hétarylalkylique non substitués ou substitués ou en aryl-, arylalkyl-, hétaryl- ou hétarylalkyl-carbamate non substitués ou substitués, après avoir été enrobé au préalable sur un véhicule ou après avoir été conditionné au préalable sous forme d'une matière pure en utilisant une émulsion, est réticulé par irradiation hv pour former un composé selon la revendication 2.

**8.** Un procédé selon la revendication 6, caractérisé en ce qu'un dérivé de polysaccharide où les groupes OH en tant que groupes OR ont été transformés en ester arylique ou arylalkylique non substitués ou substitués ou en aryl- ou arylalkyl-carbamate non substitués ou substitués, après avoir été enrobé au préalable sur un véhicule ou après avoir été conditionné au préalable sous forme d'une matière pure en utilisant une émulsion, est réticulé par irradiation hv pour former un composé selon la revendication 3.

**9.** Un procédé selon la revendication 6, caractérisé en ce qu'un dérivé de la cellulose ou de l'amylose où les groupes OH en tant que groupes OR ont été transformés en ester arylique ou arylalkylique qui est non substitué ou mono- ou polysubstitué par un groupe alkyle inférieur ayant jusqu'à 7 atomes de carbone, et/ou par un halogène ou en aryl- ou arylalkyl-carbamate qui est non substitué ou mono- ou polysubstitué par un groupe alkyle inférieur ayant jusqu'à 7 atomes de carbone, et/ou par un halogène, après avoir été enrobé au préalable sur un véhicule ou après avoir été conditionné au préalable sous forme d'une matière pure en utilisant une émulsion, est réticulé par irradiation hv pour former un composé selon la revendication 4.

**10.** Un procédé selon la revendication 6, caractérisé en ce qu'un dérivé de la cellulose ou de l'amylose où les groupes OH en tant que groupes OR ont été transformés en ester phénylique ou benzylique qui est non substitué ou mono- ou polysubstitué par un groupe alkyle inférieur ayant jusqu'à 7 atomes de carbone, et/ou par un halogène ou en phényl- ou benzyl-carbamate qui est non substitué ou mono- ou polysubstitué par un groupe alkyle inférieur ayant jusqu'à 7 atomes de carbone, et/ou par un halogène, après avoir été enrobé au préalable sur un véhicule ou après avoir été conditionné au préalable sous forme d'une matière pure en utilisant une émulsion, est réticulé par irradiation hv pour former un composé selon la revendication 5.

**11.** Un procédé selon l'une quelconque des revendications 6 à 10, caractérisé en ce qu'on effectue la réticulation par irradiation à l'aide d'une lampe de décharge de mercure submersible.

**12.** Un procédé selon l'une quelconque des revendications 6 à 10, caractérisé en ce qu'on effectue la réticulation par irradiation à l'aide d'une lampe à laser.

**13.** Un procédé selon l'une quelconque des revendications 6 à 10, caractérisé en ce qu'on effectue la réticulation en présence d'un photosensibilisateur.

**14.** Un procédé selon l'une quelconque des revendications 6 à 10, caractérisé en ce que le véhicule utilisé pour l'enrobage est le gel de silice, le gel de silice modifié, l'oxyde d'aluminium (alumine), le verre, le graphite ou l'oxyde de zirconium.

**15.** Un procédé selon l'une quelconque des revendications 6 à 10, caractérisé en ce qu'on utilise un solvant inerte pour la préparation d'une suspension.

**16.** Utilisation d'un dérivé de polysaccharide réticulé photochimiquement selon l'une quelconque des revendications 1 à 5, comme phase stationnaire dans des procédés de chromatographie, spécialement pour la séparation des énantiomères.

**17.** Utilisation d'un dérivé de polysaccharide réticulé photochimiquement selon l'une quelconque des revendications 1 à 5, comme matière pour la préparation de membranes pour divers types d'application.

**18.** Utilisation d'un dérivé de polysaccharide réticulé photochimiquement selon l'une quelconque des revendications 1 à 5, pour la préparation d'enrobages sur diverses matières, par exemple le bois, le papier, les plastiques et les métaux.